# DEMANDE DE BREVET EUROPEEN

(11) **EP 1 553 532 A1**
(43) Date de publication de la demande: **13.07.2005**
(21) Numéro de dépôt: 05300016.2
(22) Date de dépôt: 10.01.2005
(51) Int. Cl.: G07F 17/10

(54) **Système de gestion de clés pour usage cryptophonique, notamment en mettant en oeuvre une infrastructure de gestion de clés publiques (PKI)**

(30) Priorité: 08.01.2004 FR 0400153
(71) Demandeur: Ercom Engineering Réseaux Communications, 78140 Vélizy-Villacoublay (FR)
(72) Inventeur: Laubacher, Eric, 78180 Montigny-le-Bretonneux (FR)
(74) Mandataire: Cases Thomas, Raphael Ildefonso

(57) **Abrégé**

L'invention concerne un procédé de gestion de clés pour usage cryptophonique, notamment en mettant en oeuvre une infrastructure de gestion de clés publiques (PKI) ; ledit procédé mettant en oeuvre :
- des cartes à puce programmables (10, 12, 14) comportant un module logiciel dédié, ou "applet" (11) ; ledit module logiciel dédié ou "applet", comportant :
   des fonctionnalités d'administration destinées à la fonction de carte CA (12', 14'), et
   des fonctionnalités d'utilisation destinées à la fonction de carte utilisateur CU (10').

## Description

### Domaine de l'invention :

L'invention vise à fournir un système évolué de gestion de clés pour usage cryptophonique, notamment en mettant en oeuvre une infrastructure de gestion de clés publiques (Public Key Infrastructure ou PKI).

### Problèmes de l'art antérieur traités par l'invention :

Les systèmes de gestion de clés pour usage cryptophonique connus utilisent des terminaux informatiques destinés à générer les différents éléments aléatoires nécessaires au système.

Ces systèmes, composés d'un équipement informatique, effectuant la gestion de clés et relié à un ou plusieurs réseaux de télécommunications, présentent de nombreux inconvénients que l'invention tend à résoudre.

Ainsi, l'invention a pour objet d'améliorer la protection d'une infrastructure ou d'un réseau de communication, mettant en oeuvre des clés publiques pour le cryptage des communications transmises entre divers terminaux de ce réseau, vis-à-vis des attaques extérieures visant à, par exemple, décrypter des informations transmises dans ce réseau ou à modifier le fonctionnement des terminaux en piégeant ces derniers.

L'invention a aussi pour objet de limiter la complexité d'un système cryptographique en limitant le nombre d'éléments qui interviennent dans ce système.

De façon corollaire, l'invention a également pour objet de permettre la prédétermination simple d'un niveau de qualité pour un système cryptographique donné, ce niveau de qualité étant déterminé simplement grâce au nombre réduit d'éléments qui interviennent dans ce système.

Par ailleurs, l'invention a en outre pour objet de simplifier la commercialisation et l'utilisation d'un système de gestion de clés pour usage cryptographique.

Finalement, l'invention a pour objet de garantir la cohérence des données relatives à la sécurité du système cryptographique.

### Résumé de l'invention :

L'invention concerne un procédé de gestion de clés pour usage cryptophonique, notamment en mettant en oeuvre une infrastructure de gestion de clés publiques (PKI) ; ledit procédé mettant en oeuvre :

- des cartes à puce programmables comportant un module logiciel dédié, ou "applet" ; ledit module logiciel dédié ou "applet", comportant :

des fonctionnalités d'administration destinées à la fonction de carte CA, et

des fonctionnalités d'utilisation destinées à la fonction de carte utilisateur CU;

Une carte CA contenant des données relatives aux cartes utilisateur CU et à un protocole de mise à jour desdites cartes utilisateur CU; ledit protocole de mise à jour permettant des mises à jour à distance sécurisées desdites cartes utilisateur CU au moyen de ladite carte administrateur CA ;

Ledit procédé mettant en oeuvre également :

- une initialisation d'une des cartes comme carte administrateur CA à l'aide d'un équipement informatique,

- une initialisation d'autres cartes comme cartes utilisateurs CU à l'aide de la carte CA,

- une utilisation d'un protocole d'authentification à distance entre ces cartes quelque soit leur fonction.

Les avantages de l'invention sont nombreux. Un premier avantage de l'invention réside dans l'utilisation de cartes à puces pour mettre en oeuvre la gestion des clefs à usage cryptographique.

Une telle utilisation de cartes à puce accroît la sécurité du système étant donné qu'une carte à puce peut fonctionner selon un mode unidirectionnel tel qu'on ne peut accéder qu'aux données délivrées par la carte à puce, et non à l'ensemble des données mémorisées dans cette carte.

Dès lors, il devient très difficile de piéger la carte pour attaquer le réseau contrairement à un système selon l'art antérieur qui mettait en oeuvre un terminal informatique accessible par ses connexions bidirectionnelles qui lui permettent de centraliser les opérations cryptographiques.

Un second avantage de l'invention réside dans la simplification du système cryptographique puisque les cartes à puce effectuent les différentes opérations de cryptage de telle sorte qu'aucun terminal informatique n'est requis pour effectuer ces opérations.

De façon corollaire, une telle simplification du système cryptographique permet d'assurer plus facilement un niveau de qualité pour le système puisqu'un nombre réduits d'éléments sont à prendre en compte pour déterminer cette qualité.

Par ailleurs, d'autres avantages découlent clairement pour l'utilisation et/ou la commercialisation d'un système cryptographique selon l'invention.

Ainsi, l'invention fournit un mécanisme de révocation simple à mettre en oeuvre puisqu'une des cartes à puce, dénommée carte CA, peut révoquer les droits d'une carte utilisateur CU, par exemple perdue ou volée. Dans ce cas, on dit aussi que la carte CA peut révoquer le certificat d'une carte utilisateur CU.

D'autres avantages de l'invention résident dans la mobilité du système de gestion PKI via les cartes, dans la possibilité de réutiliser des cartes pour générer un nouveau système ou encore dans l'absence de manipulation, par un utilisateur, d'élément secret autre que le code pin visant à identifier chaque utilisateur.

Dans ce dernier cas, on minimise les tâches relatives à la sécurité pour les utilisateurs et les administrateurs du système.

La commercialisation d'un système selon l'invention est favorisée étant donné sa grande souplesse pour son utilisation ultérieure. Ainsi, lors de la vente des cartes à puce considérées, les futures carte(s) CA et cartes utilisateurs CU sont identiques de telle sorte qu'un acquéreur de x cartes peut former n groupes avec, par exemples, x/n cartes dans chaque groupe comprenant au moins une carte CA et deux cartes utilisateurs CU.

Finalement, il est important de noter que, si une carte CA est défaillante, l'ensemble du système est neutralisé. Toutefois, l'invention résulte de la constatation qui lui est propre selon laquelle les bénéfices de l'invention sont supérieurs à ce risque.

De plus, il est toujours possible de générer une carte CA auxiliaire dans un groupe afin de parer à une panne d'une carte CA principale.

Dans un mode de réalisation, on effectue les mises à jour à distance sécurisées desdites cartes utilisateur CU au moyen de ladite carte administrateur CA vis-à-vis des opérations suivantes : un déblocage d'un code PIN, un renouvellement de certificat, une transmission d'une liste de révocation.

Selon un mode de réalisation, on initialise d'autres cartes comme cartes utilisateurs CU à l'aide de la carte CA en transmettant des clefs de famille générées par la carte CA, les mêmes clefs de famille étant utilisées pour une même famille de carte, un certificat étant délivré lors de cette opération.

Dans un mode de réalisation, chaque carte génère son bi-clé RSA.

Selon un mode de réalisation, une carte CA peut mettre en oeuvre au moins une des fonctions suivantes : Révocation des cartes par transmission d'une liste de révocation, déblocage du code PIN, demande de régénération du bi-clé RSA d'authentification de la carte, renouvellement du certificat.

Dans un mode de réalisation, une carte CA et/ou CU peut effectuer au moins une des fonctions suivante : la gestion de sous-groupes à l'intérieur d'une même famille, le stockage de la base de données des cartes créées et de leur état de mise à jour dans la carte CA, la protection des données utilisateurs (carte Utilisateur) ou de la base de données (carte CA) par code PIN, ou encore un mécanisme de recyclage des cartes permettant d'effacer toutes données contenues dans la carte et une réutilisation de cette dernière.

L'invention concerne également un système de gestion de clés pour usage cryptophonique, notamment en mettant en oeuvre une infrastructure de gestion de clés publiques (PKI) ; ledit système comprenant :

- des cartes à puce programmables comportant un module logiciel dédié, ou "applet"; ledit module logiciel dédié ou "applet", comportant :

des fonctionnalités d'administration destinées à la fonction de carte CA, et

des fonctionnalités d'utilisation destinées à la fonction de carte utilisateur CU;

Une carte CA contenant des données relatives aux cartes utilisateur CU et à un protocole de mise à jour desdites cartes utilisateur CU; ledit protocole de mise à jour permettant des mises à jour à distance sécurisées desdites cartes utilisateur CU au moyen de ladite carte administrateur CA ;

Ledit système comprenant également :

- des moyens pour initialiser une des cartes comme carte administrateur CA à l'aide d'un équipement informatique,

- des moyens pour initialiser d'autres cartes comme cartes utilisateurs CU à l'aide de la carte CA,

- des moyens pour utiliser un protocole d'authentification à distance entre ces cartes CA et CU,

Selon un procédé conforme à l'une des réalisations précédentes.

L'invention concerne également des cartes à puce destinées à la gestion de clés pour usage cryptophonique, notamment en mettant en oeuvre une infrastructure de gestion de clés publiques (PKI) ; ledit système comprenant :

- ces cartes à puce étant programmables comportant un module logiciel dédié, ou "applet"; ledit module logiciel dédié ou "applet", comportant :

des fonctionnalités d'administration destinées à la fonction de carte CA, et

des fonctionnalités d'utilisation destinées à la fonction de carte utilisateur CU;

Une carte CA contenant des données relatives aux cartes utilisateur CU et à un protocole de mise à jour desdites cartes utilisateur CU; ledit protocole de mise à jour permettant des mises à jour à distance sécurisées desdites cartes utilisateur CU au moyen de ladite carte administrateur CA ;

Ces cartes comprenant :

- des moyens pour qu'une de ces cartes soit initialisée comme carte administrateur CA à l'aide d'un équipement informatique,

- des moyens pour que d'autres de ces cartes soient initisalisées comme cartes utilisateurs CU à l'aide de la carte CA,

- des moyens pour utiliser un protocole d'authentification à distance entre ces cartes CA et CU,

Selon un procédé conforme à l'une des réalisations précédentes.

Dans un mode de réalisation, les cartes sont des cartes à puce programmables du type Javacard 2.2 et OpenPlatform 2.1.1'.

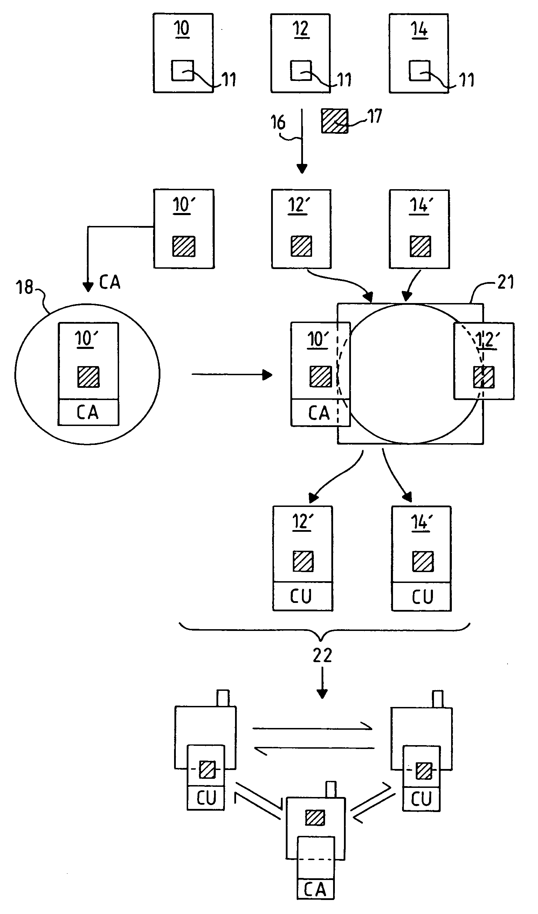

D'autres caractéristiques et avantages de l'invention apparaîtront avec la description de sa réalisation préférée effectuée ci-dessous, à titre illustratif et non limitatif, en faisant référence à l'unique figure ci-jointe sur laquelle est représentée l'initialisation des cartes à puce d'un système de gestion de clés pour usage cryptophonique conforme à l'invention.

Plus précisément, sur cette figure sont représentées des cartes à puce programmables 10, 12 et 14 du type Javacard 2.2 et OpenPlatform 2.1.1' comportant un module logiciel dédié dénommé "applet" 11.

Ce module logiciel dédié 11 est programmé, lors d'une opération 16, avec des moyens 17 comprenant :

des fonctionnalités d'administration CA destinées à être mise en oeuvre par une carte CA pour, notamment, contenir des données relatives aux futures cartes utilisateurs CU et à un protocole de mise à jour des cartes utilisateur.

Un tel protocole de mise à jour permet des mises à jour à distance sécurisées des cartes utilisateur CU au moyen de la carte CA, notamment pour un déblocage du code PIN, pour un renouvellement de certificat ou encore pour une transmission d'une liste de révocation.

des fonctionnalités d'utilisation destinées à être mises en oeuvre par des cartes utilisateurs CU.

Le système comprend en outre:

- un équipement informatique 18 mis en oeuvre comme terminal permettant de configurer une carte 10 en carte CA 10', par exemple un ordinateur dit "Station d'Administration Secphone",

- un équipement 21 informatique qui permet de configurer les cartes 12 et 14 en cartes 12' et 14' utilisateurs CU.

II apparaît donc que l'applet 17 selon l'invention, ou "applet Secphone", contient à la fois les fonctionnalités d'administration (carte CA) et d'utilisation (carte utilisateur CU) : les cartes 10 , 12 et 14 sont identiques à la vente et leur distinction se fait lors de l'initialisation de la carte par l'administrateur.

Par la suite, le système 22 met en oeuvre un protocole d'authentification forte à distance des cartes utilisateur. Un exemple d'authentification forte de la carte à puce distante est le suivant:

*Premièrement, on effectue un échange des certificats scellés puis chiffrés par les clés de famille 3DES 168bits à rajouter en amont : la carte CA introduit les clefs de famille lors de l'initialisation des cartes utilisateurs, ces clefs de famille étant générés lors de l'initialisation de la carte ca.*

*Puis on effectue un échange des défis cryptés en RSA 1664, scellés puis chiffrés par les clés de famille 3DES 168bits.*

*Ensuite s'effectue un échange des réponses au défi cryptées en RSA 1664, scellées puis chiffrées par les clés de Session 3DES 168 bits.*

*Et on effectue une vérification de la réponse.*

*Par ailleurs, deux clés de* session *par dérivation cryptographique d'aléas issus du générateur matériel de la carte* à *puce pour le chiffrement AES 256 bits de la communication sont fournis, ainsi que des aléas de qualité cryptographique.*

Lors des communications dans le système 22, la carte CA contient toutes les données du groupe de cartes utilisateurs CU qui lui sont associés, ainsi que le protocole de mise à jour de ces cartes utilisateur.

Ces communications sont notamment sécurisées vis-à-vis du rejeu d'une connexion grâce au choix d'aléas fournit par le générateur interne de la carte à puce, ce choix n'étant pas prédictible.

De plus, la confidentialité des échanges entre les cartes à puce est assurée par le chiffrement des données transmises par des clés de sessions calculées en interne, c'est-à-dire dans les cartes, et jamais transmises.

L'anonymat des connexions est assuré vis-à-vis de toute personne en dehors du groupe par le chiffrement du certificat mis en oeuvre par les cartes Secphone.

Parmi ces fonctions, la carte CA peut mettre en oeuvre au moins une des fonctions suivantes :

Révocation des cartes par transmission d'une liste de révocation.

Déblocage du code PIN

Demande de régénération du bi-clé RSA d'authentification de la carte.

Renouvellement du certificat.

II est claire que cette liste n'est pas exhaustive et qu'il est parfaitement possible d'effectuer de nouvelles fonctions propres à une demande particulière, telle que la gestion de sous-groupes à l'intérieur d'une même famille, le stockage de la base de données des cartes créées et de leur état de mise à jour dans la carte CA, la protection des données utilisateurs (carte Utilisateur) ou de la base de données (carte CA) par code PIN, ou encore un mécanisme de recyclage des cartes permettant d'effacer toutes données contenues dans la carte et une réutilisation de cette dernière.

## Revendications

1. Procédé de gestion de clés pour usage cryptophonique, notamment en mettant en oeuvre une infrastructure de gestion de clés publiques (PKI) ; ledit procédé mettant en oeuvre :
- des cartes à puce programmables (10, 12, 14) comportant un module logiciel dédié, ou "applet" (11) ; ledit module logiciel dédié ou "applet", comportant :
des fonctionnalités d'administration destinées à la fonction de carte CA (12', 14'), et
des fonctionnalités d'utilisation destinées à la fonction de carte utilisateur CU (10');
Une carte CA contenant des données relatives aux cartes utilisateur CU et à un protocole de mise à jour desdites cartes utilisateur CU; ledit protocole de mise à jour permettant des mises à jour à distance sécurisées desdites cartes utilisateur CU au moyen de ladite carte administrateur CA ;
Ledit procédé mettant en oeuvre également :
- une initialisation d'une des cartes (10) comme carte administrateur CA à l'aide d'un équipement informatique (18),
- une initialisation d'autres cartes (12, 14) comme cartes utilisateurs CU (12', 14') à l'aide de la carte CA (10'),
- une utilisation d'un protocole d'authentification à distance entre ces cartes CA et CU.

2. Procédé selon la revendication 1 **caractérisé en ce qu'**on effectue les mises à jour à distance sécurisées desdites cartes utilisateur CU au moyen de ladite carte administrateur CA vis-à-vis des opérations suivantes : un déblocage d'un code PIN, un renouvellement de certificat, une transmission d'une liste de révocation.

3. Procédé selon la revendication 1 ou 2 **caractérisé en ce qu'**on initialise d'autres cartes comme cartes utilisateurs CU à l'aide de la carte CA en transmettant des clefs de famille générées par la carte CA, les mêmes clefs de famille étant utilisées pour une même famille de carte, un certificat étant délivré lors de cette opération.

4. Procédé selon l'une des revendications précédentes **caractérisé en ce que** chaque carte génère son bi-clé RSA.

5. Procédé selon l'une des revendications précédentes **caractérisé en ce qu'**une carte CA peut mettre en oeuvre au moins une des fonctions suivantes : Révocation des cartes par transmission d'une liste de révocation, déblocage du code PIN, demande de régénération du bi-clé RSA d'authentification de la carte, renouvellement du certificat.

6. Procédé selon l'une des revendications précédentes **caractérisé en ce qu'**une carte CA et/ou CU peut effectuer au moins une des fonctions suivante : la gestion de sous-groupes à l'intérieur d'une même famille, le stockage de la base de données des cartes créées et de leur état de mise à jour dans la carte CA, la protection des données utilisateurs (carte Utilisateur) ou de la base de données (carte CA) par code PIN, ou encore un mécanisme de recyclage des cartes permettant d'effacer toutes données contenues dans la carte et une réutilisation de cette dernière.

7. Système de gestion de clés pour usage cryptophonique, notamment en mettant en oeuvre une infrastructure de gestion de clés publiques (PKI) ; ledit système comprenant :
- des cartes à puce programmables (10, 12, 14) comportant un module logiciel dédié, ou "applet" (11) ; ledit module logiciel dédié ou "applet", comportant :
des fonctionnalités d'administration destinées à la fonction de carte CA (12', 14'), et
des fonctionnalités d'utilisation destinées à la fonction de carte utilisateur CU (10');
Une carte CA contenant des données relatives aux cartes utilisateur CU et à un protocole de mise à jour desdites cartes utilisateur CU; ledit protocole de mise à jour permettant des mises à jour à distance sécurisées desdites cartes utilisateur CU au moyen de ladite carte administrateur CA ;
Ledit système comprenant également :
- des moyens pour initialiser une des cartes (10) comme carte administrateur CA à l'aide d'un équipement informatique (18),
- des moyens pour initialiser d'autres cartes (12, 14) comme cartes utilisateurs CU (12', 14') à l'aide de la carte CA (10'),
- des moyens pour utiliser un protocole d'authentification à distance entre ces cartes CA et CU,
Selon un procédé conforme à l'une des revendications précédentes.

8. Cartes à puce destinées à la gestion de clés pour usage cryptophonique, notamment en mettant en oeuvre une infrastructure de gestion de clés publiques (PKI) ; ledit système comprenant :
- ces cartes à puce étant programmables (10, 12, 14) comportant un module logiciel dédié, ou "applet" (11) ; ledit module logiciel dédié ou "applet", comportant :
des fonctionnalités d'administration destinées à la fonction de carte CA (12', 14'), et
des fonctionnalités d'utilisation destinées à la fonction de carte utilisateur CU (10');
Une carte CA contenant des données relatives aux cartes utilisateur CU et à un protocole de mise à jour desdites cartes utilisateur CU; ledit protocole de mise à jour permettant des mises à jour à distance sécurisées desdites cartes utilisateur CU au moyen de ladite carte administrateur CA ;
Ces cartes comprenant :
- des moyens pour qu'une (10) de ces cartes soit initialisée comme carte administrateur CA à l'aide d'un équipement informatique (18),
- des moyens pour que d'autres (12, 14) de ces cartes soient initialisées comme cartes utilisateurs CU (12', 14') à l'aide de la carte CA (10'),
- des moyens pour utiliser un protocole d'authentification à distance entre ces cartes CA et CU,
Selon un procédé conforme à l'une des revendications 1 à 6.

9. Cartes selon la revendication 8 **caractérisées en ce qu'**elle sont des cartes à puce programmables (10, 12 et 14) du type Javacard 2.2 et OpenPlatform 2.1.1'.
